# EUROPEAN PATENT APPLICATION

(11) **EP 2 402 855 A1**
(43) Date of publication of application: **04.01.2012**
(21) Application number: 10159472.9
(22) Date of filing: 09.04.2010
(51) Int. Cl.: G06F 9/44, G06F 9/445

(54) **Electronic device, apparatus and method for displaying a manual**

(30) Priority: 06.04.2010 KR 20100031213
(71) Applicant: Samsung Electronics Co., Ltd., Gyeonggi-do 443-742 (KR)
(72) Inventor: Kim, Jin Ho, Suwon-si, Gyeonggi-do (KR); Shim, Jae Young, Gyeonggi-do (KR); Cho, Yong Ki, Gyeonggi-do (KR); Park, Byoung Oh, Gyeonggi-do (KR)
(74) Representative: Grootscholten, Johannes A.M.

(57) **Abstract**

Manuals of various electronic devices are stored in a portable memory device, and the manuals are displayed on the electronic devices as the portable memory device is connected with the electronic devices whenever the manuals are necessary, so that users easily refer to the manuals. Convenience of the users is improved. The portable memory device is individually utilized, so user satisfaction is improved. The portable memory device storing the manuals is provided to the users free of charge, so the user satisfaction is improved. Wastes and environment contamination caused by book-type manuals are reduced. Since the portable memory device is used instead of the book-type manual, the size of a box for accessory parts is minimized, so that transportation cost is reduced.

## Description

### CROSS-REFERENCE TO RELATED APPLICATIONS

This application claims the benefit of Korean Patent Application No. 10-2010-0031213, filed on April 6, 2010, in the Korean Intellectual Property Office, the disclosure of which is incorporated herein by reference.

### BACKGROUND

### 1. Field

The disclosure relates to an electronic device, a manual provision system having the same and a manual provision method. More particularly, the disclosure relates to an electronic device capable of providing users with usage information by displaying a manual, a manual provision system having the same and a manual provision method.

### 2. Description of the Related Art

A provider of an electronic device provides users with a manual prepared in the form of a book such that the users can easily use the electronic device. The manual includes the introduction, installation method, usage method, functions, malfunction detection method, and notes to be taken into consideration when the electronic device is used.

Most users who purchase an electronic device learn basic functions of the electronic device by using a manual, and refer to the manual when special functions, which are rarely used, are required. However, most users do not carefully store the manual in a fixed place, so the users may lose the manual or do not remember the place where the manual is stored if much time lapses after purchasing the electronic device. Thus, the users may feel inconvenienced when using the electronic device because they do not fully aware of the functions of the electronic device, or the users have to pay for additional charges for telephone conversation or online conversation with an AS service center.

Further, since the provider has to provide the manual of the electronic device in the form of a book, the manufacturing cost for the electronic device may be increased. In Europe, the manual is provided in eight languages, so much cost is required.

Furthermore, when a new model having new functions is launched, although a manual of the new model is substantially identical to the manual of the previous model except for description about the new functions, the manual of the new model is newly prepared. Thus, the cost, time and labor force for preparing the manual of the new model are required. That is, it is impossible to reuse the manual by upgrading the manual prepared in the form of a book.

In order to solve the above problems, there has been proposed a scheme of manufacturing and providing a manual through online, such as Internet. However, in this case, the electronic device must be connected with the Internet through a modem or a network.

### SUMMARY

Additional aspects and/or advantages of the disclosure will be set forth in part in the description which follows and, in part, will be apparent from the description, or may be learned by practice of the disclosure.

It is an aspect of the disclosure to provide an electronic device, a manual provision system having the same, and a manual provision method, wherein a manual of the electronic device is stored in a portable memory device, so that a user can display the manual through a display unit of the electronic device by connecting the portable memory device to the electronic device whenever it is required.

The foregoing and/or other aspects of the disclosure are achieved by providing a system for providing a manual, the system comprising: a portable memory device storing the manual; and an electronic device provided with a display unit that displays the manual upon a connection state of the portable memory device.

According to one aspect, there is provided a system for providing a manual, the system comprising: a portable memory device storing the manual; and an electronic device provided with a display unit that displays an item select menu of the manual upon a connection state of the portable memory device.

The item select menu is displayed in the form of an explorer prepared as a text or an icon.

The portable memory device comprises a universal serial bus (USB) memory device, a flash memory device, or a secure digital (SD) memory card.

The manual is stored in the form of at least one of a dynamic image file, a picture file, a text file and a flash file.

The system further comprises a server that stores various manuals, wherein the portable memory device receives at least one manual from the server and stores the manual therein.

The manual stored in the portable memory device is upgradable.

The system further comprises a user terminal that communicates with the server upon the connection state of the portable memory device.

The electronic device comprises a television that displays broadcasting signals by receiving the broadcasting signals from an outside.

The television displays the manual on a part of the display unit and displays image signals of the broadcasting signals on a remaining part of the display unit.

The television displays the item select menu of the manual on a part of the display unit and displays image signals of the broadcasting signals on a remaining part of the display unit.

According to another aspect, there is provided an electronic device comprising: a port; a controller that determines if a portable memory device is connected with the port, and checks if a manual exists in the portable memory device to display the manual when the portable memory device is connected with the port; and a display unit that displays the manual under the control of the controller.

The manual is divided into a plurality of items based on functions of the electronic device, and the controller determines an operation mode of the electronic device to display items of the manual corresponding to the operation mode of the electronic device.

According to further another aspect, there is provided an electronic device comprising: a port; a controller that determines if a portable memory device is connected with the port, and checks if a manual exists in the portable memory device to display an item select menu of the manual when the portable memory device is connected with the port; and a display unit that displays the item select menu of the manual under the control of the controller.

The manual is divided into a plurality of items based on functions of the electronic device, and the controller displays items of the manual on the display unit when the item select menu is selected by a user.

According to further another aspect, there is provided a method for providing a manual, the method comprising: determining whether a portable memory device storing the manual is connected to an electronic device; and displaying the manual on the electronic device when the portable memory device is connected to the electronic device.

The displaying of the manual on the electronic device further comprises: determining an operation mode of the electronic device when the portable memory device is connected to the electronic device; and displaying an item of the manual corresponding to the operation mode of the electronic device.

The displaying of the manual on the electronic device further comprises: displaying the manual on a part of the electronic device when a function of the electronic device is adjusted by a user; and displaying an adjustment result on a remaining part of the electronic device.

The displaying of the manual on the electronic device further comprises: displaying an item select menu of the manual when the portable memory device is connected to the electronic device.

The displaying of the manual on the electronic device further comprises: determining if an item of the manual displayed on the electronic device represents one of a usage method, an installation method and function manipulation; and sequentially displaying information corresponding to the item of the manual such that a user is fully aware of the information.

### BRIEF DESCRIPTION OF THE DRAWINGS

These and/or other aspects and advantages of the disclosure will become apparent and more readily appreciated from the following description of the embodiments, taken in conjunction with the accompanying drawings of which:
FIG. 1 is a block diagram illustrating a manual provision system provided with an electronic device according to one embodiment;
FIG. 2 is a block diagram illustrating a manual provision system provided with a television according to another embodiment;
FIG. 3 is a flowchart illustrating a manual provision method of a manual provision system including a television according to another embodiment;
FIG. 4 is a diagram illustrating a display unit of a manual provision system according to another embodiment; and
FIG. 5 is a block diagram illustrating a manual provision system according to further another embodiment.

### DETAILED DESCRIPTION

Hereinafter, embodiments of the disclosure will be described in detail with reference to accompanying drawings.

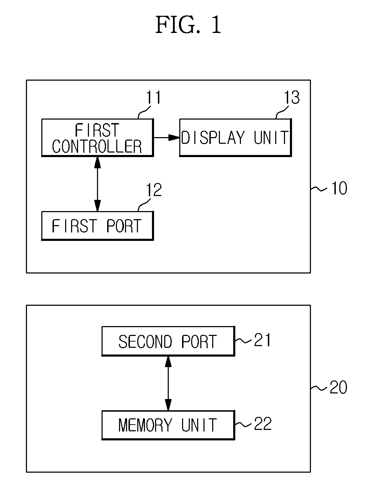

FIG. 1 is a block diagram illustrating a manual provision system provided with an electronic device according to one embodiment. The system comprises an electronic device 10 and a portable memory device 20.

The electronic device 10 comprises a television, a microwave oven, an air conditioner, a washing machine or a refrigerator capable of displaying a manual. The electronic device 10 comprises a first controller 11, a first port 12 and a display unit 13.

After the electronic device 10 is powered on, the first controller 11 determines a connection state of the portable memory device 20 through the first port 12. If the portable memory device 20 is connected with the electronic device 10, the first controller 11 determines if the manual of the electronic device 10 is stored in the portable memory device 20. If the manual is stored in the portable memory device 20, the first controller 11 controls the display unit 13 to display the manual. Further, the first controller 11 determines if the portable memory device 20 is disconnected through the first port 12. If the portable memory device 20 is disconnected from the electronic device 10, the first controller 11 controls the display unit 13 to stop the display operation for the manual.

When the first controller 11 controls the display unit 13 to display the manual, the first controller 11 determines the current mode of the electronic device 10 and controls the display unit 13 to automatically display items of the manual corresponding to the current mode. In detail, the manual is divided into various items, such as the introduction, installation method, usage method, functions, notes and malfunction detection method, based on the functions of the electronic device 10 and these items have identification number (ID) information, respectively. The electronic device 10 comprises a plurality of modes having ID information, respectively. Since the ID information of each item of the manual corresponds to the ID information of each mode of the electronic device 10, the electronic device 10 can display the item of the manual corresponding to the current mode.

In addition, when the first controller 11 controls the display unit 13 to display the manual, the first controller 11 may allow the user to select the items of the manual corresponding to the current mode of the electronic device 10 without automatically displaying the items of the manual corresponding to the current mode. In detail, if the portable memory device 20 is connected to the first port 12 of the electronic device 10, the first controller 11 displays an item select menu of the manual stored in the portable memory device 20 on the display unit 13 in the form of an explorer prepared as a text or an icon. Thus, if the user selects the item select menu of the manual displayed on the display unit 13, the item of the manual, which is divided into a plurality of items based on the functions of the electronic device 10, can be displayed.

The first port 12 is provided at an outer portion of a body (not shown) of the electronic device 10 and located at one side of the display unit 13. The portable memory device 20 is selectively connected with the first port 12 by a user. In detail, a second port 21 of the portable memory device 20 is inserted into the first port 12, so the electronic device 10 is electrically connected with the portable memory device 20. Thus, the first port 12 serves as a route for transmitting the manual in the portable memory device 20 to the first controller 11 of the electronic device 10.

The display unit 13 is prepared in the form of a flat panel display such as a liquid crystal display (LCD), a plasma display panel (PDP), an organic light emitting diode (OLED) or a light emitting diode (LED), and displays the manual stored in the portable memory device 20 under the control of the first controller 11.

As described above, when the portable memory device 20 is connected with the first port 12 of the electronic device 10, the first controller 11 of the electronic device 10 automatically or manually displays the manual on the display unit 13 by extracting the manual from a memory unit 22 of the portable memory device 20.

The portable memory device 20 is a storage device capable of storing the manual of the electronic device 10, such as a USB (universal serial bus) memory device, a flash memory device or an SD (secure digital) memory card. The portable memory device 20 comprises the second port 21 and the memory unit 22.

The second port 21 is connected with the first port 12 of the electronic device 10 by a user, and the memory unit 22 stores the manual. The manual is stored in the memory unit 22 in the form of at least one of a dynamic image file, a picture file, a flash file, a text file and a flash file.

The memory unit 22 of the portable memory device 20 includes at least one of a readable and writable USB memory, a flash memory and an SD memory. The second port 21 includes at least one of a USB port and an SD port for transmitting the file stored in the memory unit 22. The portable memory device 20 can be carried by a user. Further, the memory unit 22 of the portable memory device 20 has capacity for storing various files as well as the manual.

As described above, when the portable memory device 20 is electrically connected with the electronic device 10, the manual stored in the memory unit 22 of the portable memory device 20 is transmitted to the electronic device 10 through the second port 21.

As described above, the manual of various electronic devices is stored in the portable memory device 20 in such a manner that the user can see the manual displayed on the electronic device 10 by connecting the portable memory device 20 with the electronic device 10 whenever the manual is necessary, so that user can easily refer to the manual. Thus, convenience of the user can be improved. Further, the portable memory device 20 can be individually utilized, so user satisfaction can be improved.

Further, since the portable memory device 20 storing the manual can be provided to the user free of charge, the user satisfaction can be improved. Furthermore, wastes and environment contamination caused by the discarded manual prepared in the form of a book can be reduced. Moreover, since the book type manual can be omitted, the size of a box for accessory parts can be minimized, so that the transportation cost can be reduced.

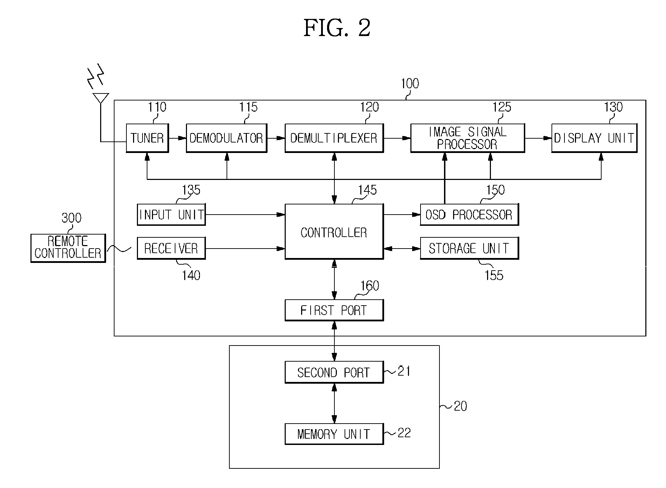

FIG. 2 is a block diagram illustrating a manual provision system provided with a television. The system comprises the television 100 and the portable memory device 20. The television 100 is one example of the electronic device 100.

The television 100 comprises a tuner 110, a demodulator 115, a demultiplexer 120, an image signal processor 125, a display unit 130, an input unit 135, a receiver 140, a controller 145, an on screen display (OSD) processor 150, a storage unit 155 and a first port 160.

The tuner 110 selects a broadcasting signal of a channel required by a user from among broadcasting signals received from broadcasting stations, and transmits the broadcasting signal of the selected channel to the demodulator 115. The demodulator 115 demodulates the broadcasting signal of he selected channel to transmit the demodulated broadcasting signal to the demultiplexer 120. The demultiplexer 120 divides the demodulated broadcasting signal into an image signal, an audio signal and additional information. The image signal processor 125 processes the image signal such that the image signal can be displayed on the display unit 130. Further, when the portable memory device 20 is connected with the television 100, the image signal processor 125 processes a signal of a manual file under the control of the controller 145. The display unit 130 displays the image signal processed by the image signal processor 125, and displays an image signal or information of the manual file, which is input from the OSD processor 150, on a screen thereof.

The display unit 130 is prepared in the form of a flat panel display such as a color display tube (CDT), a color picture tube (CPT), a multimedia display tube (MDT), an LCD, a PDP, an OLED or an LED, and displays the manual file or the image signal of the broadcasting signals.

The input unit 135 receives a command from a user and transmits a signal corresponding to the command to the controller 145. The receiver 140 receives a signal from a remote controller 300 and transmits the signal to the controller 145. The remote controller 300 remotely controls functions of the television 100. The remote controller is provided with a plurality of buttons for inputting the command of the user and transmits a signal corresponding to the command of the user to the receiver 140 of the television 100.

The controller 145 outputs at least one control signal, which is used to perform a control operation corresponding to the signal received from the input unit 135 or the receiver 140, to corresponding elements 110, 115, 120, 125, 130 and 150.

In more detail, if a power-on signal is input from the input unit 135 or the receiver 140, the controller 145 controls the tuner 110, the demodulator 115, the demultiplexer 120, the image signal processor 125 and the display unit 130 to display an image signal of broadcasting signals of a previously selected channel through the display unit 130. At this time, the controller 145 outputs an audio signal of the broadcasting signals of the previously selected channel through a speaker (not shown). Further, if a channel switching signal is received from the input unit 135 or the receiver 140, the controller 145 controls an image signal of broadcasting signals of a channel, which corresponds to the received signal, to be displayed through the display unit 130.

Further, if an OSD information display request signal is received from the input unit 135 or the receiver 140, the controller 145 controls the OSD processor 150 such that a message representing the OSD information is displayed through the display unit 130. Then, the controller 145 transmits a control signal to the OSD processor 150 such that a setting state of the OSD information is changed through the message according to a signal input from the input unit 135 or the receiver 140.

When a user requests OSD information display and manipulation by using the remote controller 300 or the input unit 135, the OSD processor 150 generates and processes the OSD information and transfers the OSD information to the image signal processor 125 under the control of the controller 145.

The OSD refers to the functions for displaying information of a monitor required for a user, adjustment of various setting items, and an adjustment state thereof on the screen of the display unit 130. Such OSD information comprises brightness, contrast, tuning, RGB adjustment, adjustment for longitudinal and transverse sizes of a screen and adjustment of screen position.

Further, upon receiving a connection signal of the second port 21 of the portable memory device 20 from the first port 160, the controller 145 reads information on the manual file stored in the memory unit 22 of the portable memory device 20, and transmits the information to the image signal processor 125.

Then, the controller 145 controls the image signal processor 125 such that the manual is automatically displayed on a local part of the display unit 130 and broadcasting program of the selected channel is displayed on a remaining part of the display unit 130.

Further, upon receiving the connection signal of the second port 21 of the portable memory device 20 from the first port 160, the controller 145 determines a driving state of the television 100 to check a current operation mode and an ID corresponding to the current operation mode. Then, the controller 145 searches for items having the ID of the current operation mode based on the IDs of the items of the manual stored in the memory unit 22 of the portable memory device 20, and transmits file information of the searched item to the image signal processor 125.

The storage unit 155 stores various operation modes corresponding to the driving states of the television 100 and ID information corresponding to the various operation modes of the television 100.

In addition, upon receiving the connection signal of the second port 21 of the portable memory device 20 from the first port 160, the controller 145 may allow the user to select the display of the manual without automatically displaying the manual corresponding to the operation mode of the television 100. In detail, if the portable memory device 20 is connected to the first port 160 of the television 100, the controller 145 displays an item select menu of the manual stored in the portable memory device 20 on the display unit 130 in the form of an explorer prepared as a text or an icon. Thus, if the user selects the item select menu of the manual displayed on the display unit 130, the manual, which is divided into a plurality of items based on the functions of the television 100, can be displayed.

The second port 21 of the portable memory device 20 is inserted into the first port 160, so the television 100 is electrically connected with the portable memory device 20. Thus, the first port 160 serves as a route for transmitting the manual stored in the portable memory device 20 to the controller 145 of the television 100.

The first port 160 is provided at an outer portion of a body (not shown) of the television 100 and located at one side of the display unit 130. The portable memory device 20 is selectively connected with the first port 160 by a user.

When the portable memory device 20 is connected with the television 100, the controller 145 of the television 100 reads the manual from the memory unit 22 of the portable memory device 20, and displays the manual on the display unit 130 after image-processing the manual through the image signal processor 125.

The portable memory device 20 comprises the second port 21 and the memory unit 22. The second port 21 is connected with the first port 160 of the television 100 by a user, and the memory unit 22 stores the manual. When the first port 160 of the television 100 is connected with the second port 21 of the portable memory device 20, the manual is transmitted to the controller 145 of the television 100 through the second port 21 under the control of the controller 145. The manual file is stored in the form of at least one of a dynamic file, a picture file, a text file and a flash file. Further, each item of the manual has ID information corresponding to the ID information of each operation mode of the television 100.

That is, if the portable memory device 20 is electrically connected with the television 100, the manual file stored in the memory unit 22 of the portable memory device 20 is transmitted to the television 100 through the second port 21 of the portable memory device 20 and the first port 160 of the television 100.

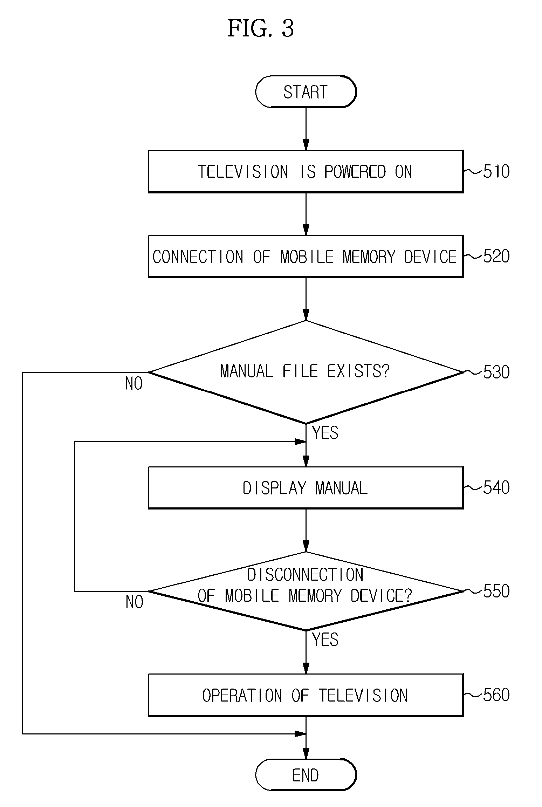

FIG. 3 is a flowchart illustrating a manual provision method of the manual provision system provided with the television according to another embodiment.

Referring to FIGS. 2 to 4, the television 100 provided with the display unit 130 is powered on by using the input unit 135 or the remote controller 300 (step 510). After the television 100 is powered on, when a user wants to watch broadcasting program through the television 100, the user selects a channel by using the input unit 135 or the remote controller 300.

If the user needs to refer to the manual of the television 100 when the television 100 (electronic device 10) is powered on or while the user is watching the broadcasting program because the television 100 operates abnormally or there is a need to connect an external device (a speaker or an AV source device such as a video disc player (DVDP)) to the television 100, the user inserts the portable memory device 20 into the first port 160 provided in the television 100 (step 520).

Then, the controller 145 of the television 100 (electronic device 10) checks if a manual file exists in the memory unit 22 of the portable memory device 20 (step 530). If no manual file exists in the memory unit 22 of the portable memory device 20, the controller 145 controls the display unit 130 to display a message representing that no manual exists in the portable memory device 20, and displays broadcasting program of a current channel.

In contrast, if the manual file exists in the memory unit 22 of the portable memory device 20, the controller 145 reads the manual from the memory unit 22 to display the manual through the display unit 130. The manual may be provided by a television provider, or downloaded from a server when the manual has been lost.

After that, the controller 145 determines a current operation mode (current operation state) of the television 100 such as an installation mode, an external device connection mode or an abnormal mode, and determines an ID corresponding to the current operation mode. Then, the controller 145 searches for an ID of an item of the manual corresponding to the determined ID, extracts the ID of the item of the manual, which coincides with the ID of the current operation mode of the television 100, and controls the display unit 130 to automatically display information corresponding to the extracted item of the manual (step 540) .

For example, when the television 100 is in the abnormal mode, the user inserts the portable memory device 20 into the first port 160 of the television 100 to display information of an item, which corresponds to the abnormal mode, of the manual stored in the portable memory device 20. The information of the item corresponding to the abnormal mode is used when the user checks an abnormal state of the television 100 to correct the abnormal state before calling an A/S center. Such information comprises symptoms of the abnormal state, and treatments for the abnormal state.

After the portable memory device 20 has been inserted into the first port 160 of the television 100, if the television 100 is in the broadcasting mode, the display unit 130 of the television 100 displays all items of the manual. Then, if one of the items is selected through the input unit 135 or the remote controller 300, details of the selected item and information corresponding to the selected item are displayed through the display unit 130.

At this time, if the user selects the notes, the display unit 130 displays information about the selected notes. The information comprises instructions which are taken into consideration when using the television 100 (electronic device 10) in order to prevent unexpected accident or damage.

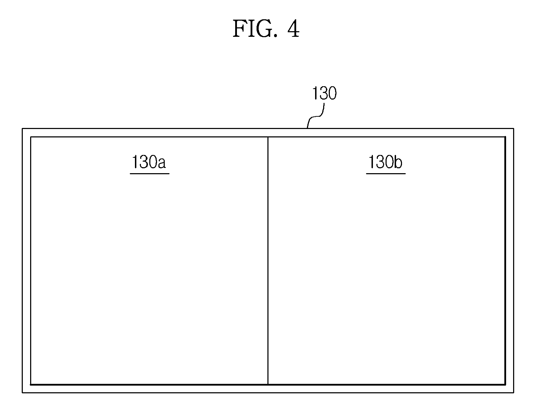

When the information of the manual is displayed through the display unit 130, the information of the manual can be displayed on a part 130a or 130b of the display unit 130, and broadcasting program can be displayed on a remaining part 130a or 130b of the display unit 130 as shown in FIG. 4.

Further, when the user wants to manipulate one function based on the manual, the controller 145 sequentially displays the items on the part 130a or 130b of the display unit 130. Thus, the user can manipulate the function for the items while watching the information sequentially displayed on the display unit 130. After the user manipulates the function of the items, an operation state of the television 100 can be displayed on the remaining part 130a or 130b of the display unit 130.

Further, when the information on the items of the manual is sequentially displayed on the part 130a or 130b of the display unit 130, the information on the items of the manual can be displayed on the subsequent screen of the display unit 130 as the user manipulates the remote controller 300 or the input unit 135.

In addition, when the portable memory device 20 is inserted into the first port 160 of the television 100, the controller 145 may allow the user to select the display of the manual without automatically displaying the manual corresponding to the current operation mode of the television 100. In detail, if the portable memory device 20 is connected to the first port 160 of the television 100, the controller 145 can display an item select menu of the manual on the display unit 130 in the form of an explorer prepared as a text or an icon.

Thus, if the user selects the item select menu of the manual displayed on the display unit 130, the items of the manual, such as the installation mode, the external device connection mode and the abnormal mode divided based on the functions of the television 100, can be displayed.

In addition, when the items of the manual are displayed through the display unit 130, the item selection menu of the manual can be displayed on a part 130a or 130b of the display unit 130, and broadcasting program can be displayed on a remaining part 130a or 130b of the display unit 130 as shown in FIG. 4.

If the user does not want to display the manual, the user stops the display operation for the manual by using the input unit 135 provided in the television 100 (electronic device 100), or the remote controller 300, or disconnects the portable memory device 20 from the first port 160 of the television 100 (step 550).

Thus, the display unit 130 of the television 100 displays broadcasting program of a previously selected channel without displaying the manual.

Further, if the function of the television 100 is manipulated by the user while the manual is being displayed, the manipulation result is instantly applied to the television 100. Thus, the television 100 having the manipulated function operates to display images (step 560).

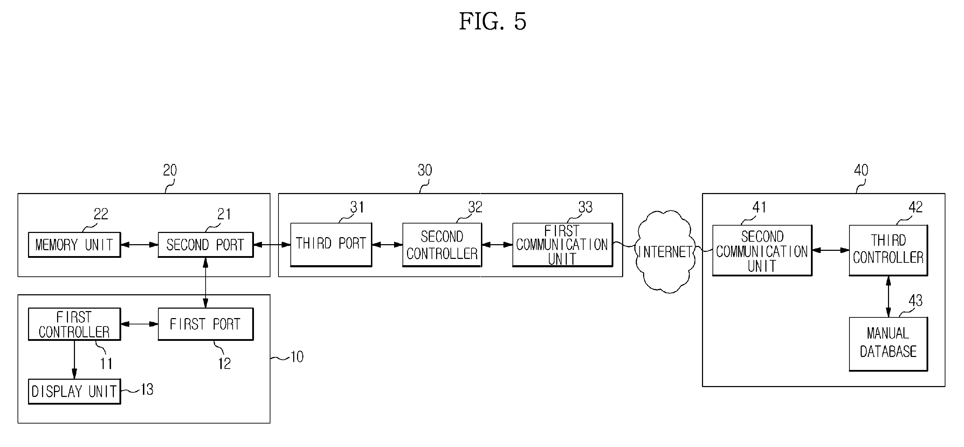

FIG. 5 is a block diagram illustrating a manual provision system according to another embodiment. The manual provision system comprises an electronic device 10, a portable memory device 20, a user terminal 30 and a server 40. Since the electronic device 10 is identical to the electronic device 10 described in the previous embodiment, detailed description thereof will be omitted.

The portable memory device 20 comprises a second port 21 and a memory unit 22. The second port 21 is selectively connected with the first port 12 of the electronic device 10 or a third port 31 of the user terminal 30 by a user, and the memory unit 22 stores a manual. The manual stored in the memory unit 22 is received from the server 40 through the user terminal 30, or provided by a provider when the user purchases the electronic device 10.

Further, the manual stored in the memory unit 22 of the portable memory device 20 can be deleted from the memory unit 22, and can be received again from the server 40. Furthermore, a new version of the manual can be downloaded from the server 40 for upgrade.

The memory unit 22 of the portable memory device 20 includes at least one of a readable and writable USB memory, a flash memory and an SD memory. The second port 21 includes at least one of a USB port and an SD port for transmitting the file stored in the memory unit 22. The portable memory device 20 can be carried by a user.

The manual is prepared in the form of at least one of a dynamic image file, a picture file, a text file and a flash file. The manual is divided into various items, such as the introduction, installation method, usage method, functions, notes and malfunction detection method, based on the functions of the electronic device 10 and these items have identification number (ID) information, respectively, corresponding to the operation modes of the electronic device 10.

As described above, if the portable memory device 20 is electrically connected with the user terminal 30 and the user terminal 30 communicates with the server 40, the portable memory device 20 receives the manual through the user terminal 30 and then stores the manual in the memory unit 22. Then, if the portable memory device 20 is connected with the electronic device 10, the manual stored in the memory unit 22 of the portable memory device 20 is transmitted to the electronic device 10 through the second port 21.

The user terminal 30 comprises the third port 31, a second controller 32 and a first communication unit 33, and the server 40 comprises a second communication unit 41, a third controller 42 and a manual database 43.

In detail, the second port 21 of the portable memory device 20 is inserted into the third port 31 of the user terminal 30. Thus, the second port 21 and the third port 31 serve as routes for transmitting the manual to the memory unit 22 of the portable memory device 20 from the user terminal 30. The second controller 32 of the user terminal 30 receives the manual from the server 40 by controlling communication of the first communication unit 33 according to the command of the user. Upon receiving the request for the manual from the user, the user terminal 30 can select a file type of the manual and receive the manual of the selected file type from the server 40.

Thereafter, the second controller 32 of the user terminal 30 stores the manual received from the server 40. If the second port 21 of the portable memory device 20 is inserted into the third port 31 of the user terminal 30, the user terminal 30 transmits the manual to the memory unit 22 of the portable memory device 20.

The second communication unit 41 of the server 40 communicates with the first communication unit 33 of the user terminal 30 through the Internet. If a manual request signal is received from the user terminal 30, the third controller 42 of the server 40 transmits the manual corresponding to the model of the electronic device 10 to the user terminal 30. The manual database 43 of the server 40 stores manual files according to various models of the electronic device 10. The manual files are stored in the manual database 43 in the form of dynamic image files, picture files, text files or flash files.

As described above, even if the manual stored in the portable memory device is deleted, the manual can be downloaded again from the server. Further, the manual can be provided in the form of a dynamic image file such as a computer graphic file, a flash file or an animation file as well as a text file, so adult citizens can also conveniently use various functions, so that utilization of the manual can be improved. Further, the manual can be easily upgraded, so that the product image of the electronic device can be improved and the quality of a service provided to a customer from an electronic device supplier can also be improved.

Further, users around the world can easily download manuals interpreted in various languages through the Internet if necessary. Furthermore, electronic device suppliers can provide users with a portable memory device storing a manual in the form of a file, instead of a book, so that time, cost and labor force required for manufacturing and transporting the manual can be considerably reduced.

Although few embodiments have been shown and described, it would be appreciated by those skilled in the art that changes may be made in these embodiments without departing from the principles and spirit of the disclosure, the scope of which is defined in the claims and their equivalents.

## Claims

1. A system for providing a manual, the system comprising:
a portable memory device storing the manual; and
an electronic device provided with a display unit that displays the manual upon a connection state of the portable memory device.

2. A system for providing a manual, the system comprising:
a portable memory device storing the manual; and
an electronic device provided with a display unit that displays an item select menu of the manual upon a connection state of the portable memory device.

3. The system of claim 2, wherein the item select menu is displayed in a form of an explorer prepared as a text or an icon.

4. The system of claim 1 or 2, wherein the portable memory device comprises a universal serial bus (USB) memory device, a flash memory device, or a secure digital (SD) memory card.

5. The system of claim 1 or 2, wherein the manual is stored in a form of at least one of a dynamic image file, a picture file, a text file and a flash file.

6. The system of claim 1 or 2, further comprising a server that stores various manuals, wherein the portable memory device receives at least one manual from the server and stores the manual therein.

7. The system of claim 6, wherein the manual stored in the portable memory device is upgradable.

8. The system of claim 6, further comprising a user terminal that communicates with the server upon the connection state of the portable memory device.

9. The system of claim 1 or 2, wherein the electronic device comprises a television that displays broadcasting signals by receiving the broadcasting signals from an outside.

10. The system of claim 9, wherein the television displays the manual on a part of the display unit and displays image signals of the broadcasting signals on a remaining part of the display unit.

11. The system of claim 9, wherein the television displays the item select menu of the manual on a part of the display unit and displays image signals of the broadcasting signals on a remaining part of the display unit.

12. An electronic device comprising:
a port;
a controller that determines if a portable memory device is connected with the port, and checks if a manual exists in the portable memory device to control display of the manual when the portable memory device is connected with the port; and
a display unit that displays the manual under a control of the controller.

13. The electronic device of claim 12, wherein the manual is divided into a plurality of items based on functions of the electronic device, and the controller determines an operation mode of the electronic device to display items of the manual corresponding to the operation mode of the electronic device.

14. An electronic device comprising:
a port;
a controller that determines if a portable memory device is connected with the port, and checks if a manual exists in the portable memory device to display an item select menu of the manual when the portable memory device is connected with the port; and
a display unit that displays the item select menu of the manual under a control of the controller.

15. The electronic device of claim 14, wherein the manual is divided into a plurality of items based on functions of the electronic device, and the controller displays items of the manual on the display unit when the item select menu is selected by a user.

16. A method for providing a manual, the method comprising:
determining whether a portable memory device storing the manual is connected to an electronic device; and
displaying the manual on the electronic device when the portable memory device is connected to the electronic device.

17. The method of claim 16, the displaying of the manual on the electronic device further comprises:
determining an operation mode of the electronic device when the portable memory device is connected to the electronic device; and
displaying an item of the manual corresponding to the operation mode of the electronic device.

18. The method of claim 16, wherein the displaying of the manual on the electronic device further comprises:
displaying the manual on a part of the electronic device when a function of the electronic device is adjusted by a user; and
displaying an adjustment result on a remaining part of the electronic device.

19. The method of claim 16, the displaying of the manual on the electronic device further comprises:
displaying an item select menu of the manual when the portable memory device is connected to the electronic device.

20. The method of claim 16, wherein the displaying of the manual on the electronic device further comprises:
determining if an item of the manual displayed on the electronic device represents one of a usage method, an installation method and function manipulation; and
sequentially displaying information corresponding to the item of the manual such that a user is fully aware of the information.
